Europäisches Patentamt

European Patent Office

Office européen des brevets

(19)

(11) Veröffentlichungsnummer: **0 237 470**
**B1**

(12) **EUROPÄISCHE PATENTSCHRIFT**

(45) Veröffentlichungstag der Patentschrift:
28.03.90

(51) Int. Cl.⁴: **G01D 5/36**

(21) Anmeldenummer: 87810056.9

(22) Anmeldetag: 28.01.87

(54) Vorrichtung zur inkrementalen Längenmessung.

(30) Priorität: 07.02.86 CH 500/86

(43) Veröffentlichungstag der Anmeldung:
16.09.87 Patentblatt 87/38

(45) Bekanntmachung des Hinweises auf die Patenterteilung:
28.03.90 Patentblatt 90/13

(84) Benannte Vertragsstaaten:
AT CH DE ES FR GB IT LI NL SE

(56) Entgegenhaltungen:
EP-A- 0 165 378
GB-A- 2 086 036

PATENT ABSTRACTS OF JAPAN, Band 9,
Nr. 210 (P-383)[1933] 28. August 1985; & JP-A-60 73 418

(73) Patentinhaber: Saphirwerk Industrieprodukte AG,
Erlenstrasse 36, CH-2555 Brügg(CH)

(72) Erfinder: Bissegger, Marcel, Gasse 52,
CH-2553 Safnern(CH)

(74) Vertreter: Wenger, René et al, Hepp & Partner AG
Marktgasse 18, CH-9500 Wil(CH)

## Beschreibung

Die Erfindung betrifft eine Vorrichtung zur inkrementalen Längenmessung gemäss dem Oberbegriff von Anspruch 1. Mit derartigen optischen Messystemen kann eine hohe Auflösung der Messstrecke und damit eine hohe Messgenauigkeit erzielt werden. Die mit Hilfe des Massstabs und der Blende erzeugten Hell-Dunkel-Signale werden durch die lichtempfindliche Empfangseinrichtung registriert und abgezählt.

Die Länge eines Weginkrements wird durch die Breite eines Teilstrichs bestimmt. Da die Minimalbreite eines Teilstrichs aus herstellungstechnischen Gründen begrenzt ist, müssen auch Zwischenwerte innerhalb eines Weginkrements bestimmt werden können. Bei bekannten Messystemen geschieht dies durch Interpolation, indem versetzt zur ersten Empfangseinrichtung wenigstens eine zweite Empfangseinrichtung angeordnet wird, die aus einer ebenfalls versetzt angeordneten Blende Hell-Dunkel-Signale empfängt. Mit Hilfe der beiden so erzeugten Signale kann ein Weginkrement weiter unterteilt werden.

Durch die EP-A 165 378 ist bereits ein Inkremental-Sensor zur digitalen Steuerung einer Maschine bekannt geworden, bei dem zur Erzeugung phasenverschobener Signale der Lichtsender und die lichtempfindliche Empfangseinrichtung zu den Markierungen unter einem spitzen Winkel eingestellt sind. Eine besondere Blende ist dabei jedoch nicht vorgesehen.

Es ist daher eine Aufgabe der Erfindung, eine Vorrichtung der eingangs genannten Art zu schaffen, welche einfach ist im Aufbau und welche möglichst unempfindlich ist gegenüber Störgrössen. Die Vorrichtung soll ausserdem platzsparend untergebracht werden können, und sie soll ein hohes Auflösungsvermögen aufweisen. Diese Aufgabe wird erfindungsgemäss mit einer Vorrichtung gelöst, welche die Merkmale von Patentanspruch 1 aufweist.

Durch die schräge Anordnung des Lichtbalkens zu den einzelnen Teilstrichen kann ersichtlicherweise auf die Empfangseinrichtung ein Lichtstrahl projiziert werden, dessen Querschnittskonfiguration sich im Verlauf eines Weginkrements in der Längsrichtung eines Teilstrichs verändert. Dadurch steht für die Auflösung eines Inkrements die gesamte Länge eines Teilstrichs zur Verfügung. Eine optisch-elektrische Signalbildung zur Interpolation fällt weg, da sich jede Relativlage des auf die Empfangseinrichtung projizierten Lichtstrahls auf einfache Weise einem bestimmten Bruchteil eines Weginkrements zuordnen lässt. Insbesondere Schwankungen in der Intensität der Lichtquelle bleiben ohne jede Auswirkung, da nur die Relativlage eines Lichtstrahls und nicht dessen Intensität für die Messung von Bedeutung ist. Auch elektromagnetische Wellen oder eine partielle Eintrübung des Massstabes durch Verschmutzung bleiben ohne Auswirkungen auf das Messergebnis.

Da die Blende unmittelbar auf einer Leuchtdiode angebracht ist, wird eine besonders kompakte und platzsparende Bauweise erreicht.

Die Relativlage des Lichtstrahls auf der Empfangseinrichtung lässt sich besonders vorteilhaft ermitteln, wenn diese in der Längsrichtung der Teilstriche mehrere Empfangseinheiten aufweist, die je nach der Relativlage zwischen Massstab und Blende zur Signalbildung alternativ aktivierbar sind. So können beispielsweise auf einem Fotodioden-Array mehrere Fotodioden übereinander angeordnet sein. Die Auflösung eines Inkrements wird ersichtlicherweise umso höher, je mehr unabhängig aktivierbare Empfangseinheiten in der Länge eines Teilstrichs auf der Empfangseinrichtung angeordnet sind.

Weitere Vorteile der erfindungsgemässen Vorrichtung ergeben sich aus der Beschreibung und aus den Zeichnungen. Ein Ausführungsbeispiel der Erfindung ist in den Zeichnungen dargestellt und wird nachstehend genauer beschrieben. Es zeigen:

Figur 1 eine perspektivische Darstellung einer Messanordnung,

Figur 2 eine Ansicht von oben auf eine Messanordnung,

Figur 3 eine Draufsicht auf einen Massstab von der Lichtquelle her gesehen,

Figur 4 die Veränderung eines Lichtstrahls auf einer Empfangseinrichtung in vier Sequenzen,

Figur 5 einen Querschnitt durch den Messtaster einer Messmaschine mit einer erfindungsgemässen Vorrichtung, und

Figur 6 eine teilweise geschnittene Draufsicht auf den Messtaster gemäss Figur 5.

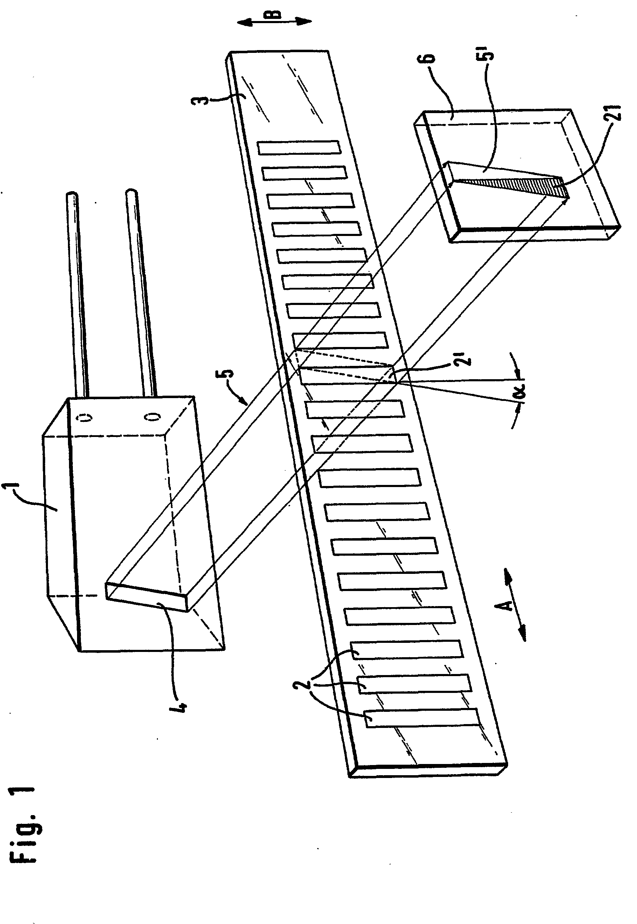

Wie in Figur 1 dargestellt, besteht die Vorrichtung im wesentlichen aus einer Lichtquelle 1, vor der eine Strichblende 4 zur Erzeugung eines gebündelten Lichtbalkens 5 angeordnet ist. Die Lichtquelle 1 ist vorzugsweise eine LED, die so bearbeitet ist, dass die Blende 4 unmittelbar auf der Oberfläche angeordnet ist. Die quaderförmige Leuchtdiode wird zu diesem Zweck unter einem Winkel von 45° angeschrägt, um einen seitlichen Lichtaustritt zu ermöglichen. Die aus einer beschichteten Glasplatte bestehende Schlitzblende wird derart seitlich auf der LED angeordnet, dass der Schlitz im Bereich der durch die Anschrägung umgelenkten Strahlen liegt. Schliesslich wird die Oberfläche der LED mit einer lichtundurchlässigen, reflektierenden Aluminiumschicht bedampft.

Der Lichtstrahl 5 wird auf eine lichtempfindliche Empfangseinrichtung 6 geworfen. Zwischen der Lichtquelle 1 bzw. der Blende 4 und der Empfangseinrichtung 6 ist ein transparenter Massstab 3 in Pfeilrichtung A verschiebbar. Selbstverständlich wäre es theoretisch auch denkbar, den Massstab 3 fest und die anderen genannten Bauteile für die Längenmessung verschiebbar anzuordnen. Auf dem Massstab 3 ist in an sich bekannter Weise ein Strichgitter bestehend aus den einzelnen Teilstrichen 2 angebracht. Auf den Teilstrichen 2 ist der Massstab nicht transparent.

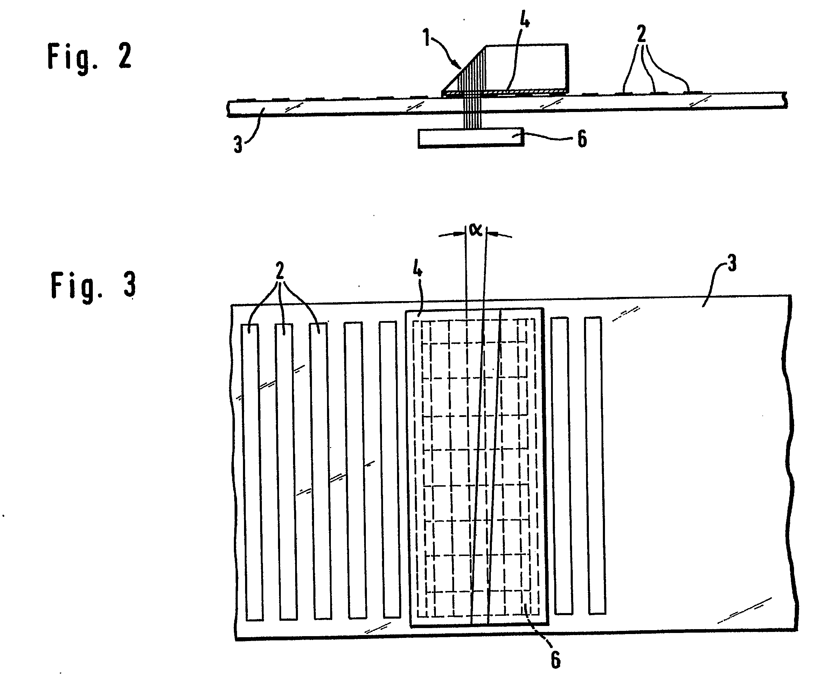

Wie insbesondere auch aus Figur 3 ersichtlich ist, wird die Blende 4 so angeordnet, dass der auf den Massstab 3 auftreffende Lichtbalken zu den Teilstrichen 2 in einem bestimmten Winkel Alpha geneigt ist. Daraus ergibt sich bei einer Verschiebung des Massstabs 3 eine sich in Längsrichtung eines Teilstrichs, in Figur 1 mit der Pfeilrichtung B angedeutet, verändernde Konfiguration des auf die Empfangseinrichtung 6 projizierten Lichtstrahls. In Figur 1 ist dargestellt, wie der Teilstrich 2' einen Teil des schrägen Lichtstrahls 5 verdeckt, so dass ein Schatten 21 auf die Empfangseinrichtung 6 geworfen wird. Zur Signalbildung auf der Empfangseinrichtung wird nur der verbleibende Lichtstrahl 5' verwendet, der bei der dargestellten Relativlage der Form eines Dreiecks aufweist, dessen Breite gegen die Unterkante der Empfangseinrichtung abnimmt.

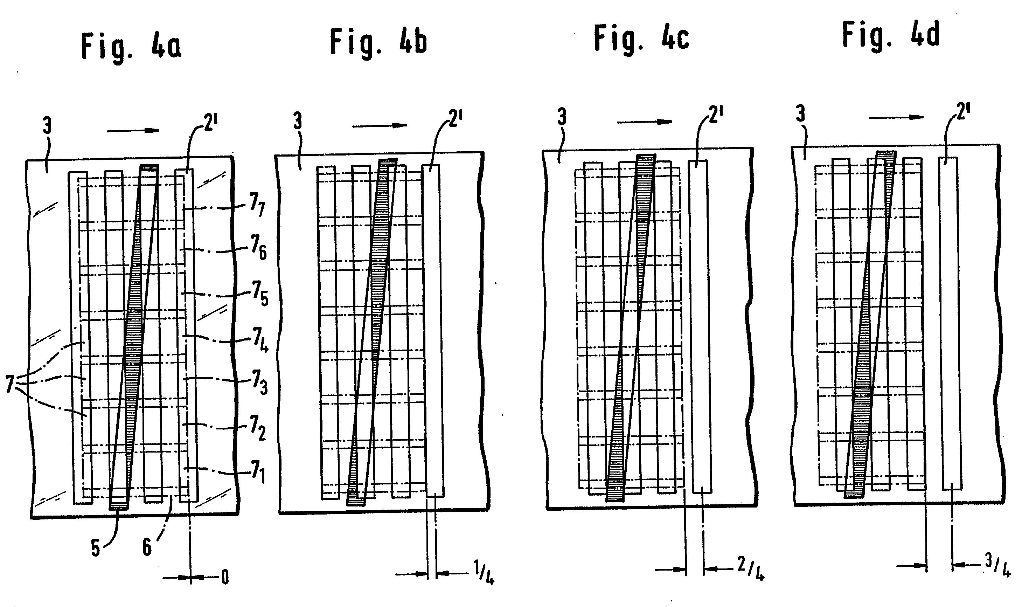

Figur 4 zeigt die Veränderung der Konfiguration und Lage eines Lichtstrahls 5 an der Empfangseinrichtung 6 bei einer Massstabverschiebung um je ein Viertel eines Inkrements. Die Empfangseinrichtung 6 ist dabei als Fotopin-Dioden-Array mit sieben übereinander angeordneten Dioden 7 ausgebildet. In Figur 4a ist eine fiktive Nullstellung dargestellt, bei welcher hauptsächlich die mittlere Diode $7_4$ belichtet wird, während die darunter und darüber liegenden Dioden nur noch stets sich verjüngende Lichtbalken erhalten.

Verschiebt sich der Massstab in Pfeilrichtung um einen Viertelteilung, so verändern sich Lage und Konfiguration des Lichtstrahls 5 derart, dass vorwiegend die oberen Dioden $7_5$, $7_6$ und $7_7$ belichtet werden, wie aus Figur 4b ersichtlich ist.

Bei Figur 4c, die einen weiteren Vorschub des Massstabs um eine Viertelteilung zeigt, wird die mittlere Diode $7_4$ praktisch nicht mehr belichtet. Dafür erfolgt eine etwa gleichmässige Belichtung der unteren Dioden $7_1$ bis $7_3$ einerseits und der oberen Dioden $7_5$ bis $7_7$ andererseits.

Bei der in Figur 4d dargestellten Verschiebung des Massstabs um insgesamt drei Viertel einer Teilung liegt das Schwergewicht der Belichtung auf den unteren Dioden $7_1$ bis $7_3$. Bei einem weiteren Vorschub um einen Viertel ergibt sich wieder das in Figur 4a dargestellte Belichtungsbild. Der Teilstrich 2' wird zur Verdeutlichung der Relativverschiebung zwischen Massstab und Empfangseinrichtung bezeichnet. Ersichtlicherweise ergibt jede beliebige Teilstrecke innerhalb eines Weginkrements eine stets wandelnde Belichtung der Fotodioden. Die technisch noch realisierbare Auflösung ist abhängig von der Anzahl Einzeldioden sowie von der Länge der Teilstriche bzw. des Lichtbalkens.

Die von den belichteten Dioden erzeugten Signale können mit einem IC ohne komplizierte Umrechnung unmittelbar zur Messwertgebung genutzt werden. Durch Abzählen der ganz durchlaufenden Durchgänge wird der gesamte Messweg ermittelt. Je nach der Reihenfolge der Diodenbeleuchtung kann auch auf die Bewegungsrichtung des Massstabs geschlossen werden. Die abgegebenen Signale lassen sich unmittelbar mit einem handelsüblichen Computer auswerten. Die Elektronik lässt sich grundsätzlich für beliebig lange Massstäbe einsetzen, so dass an Messmaschinen ohne Anpassung der Elektronik lediglich der Massstab verlängert werden kann.

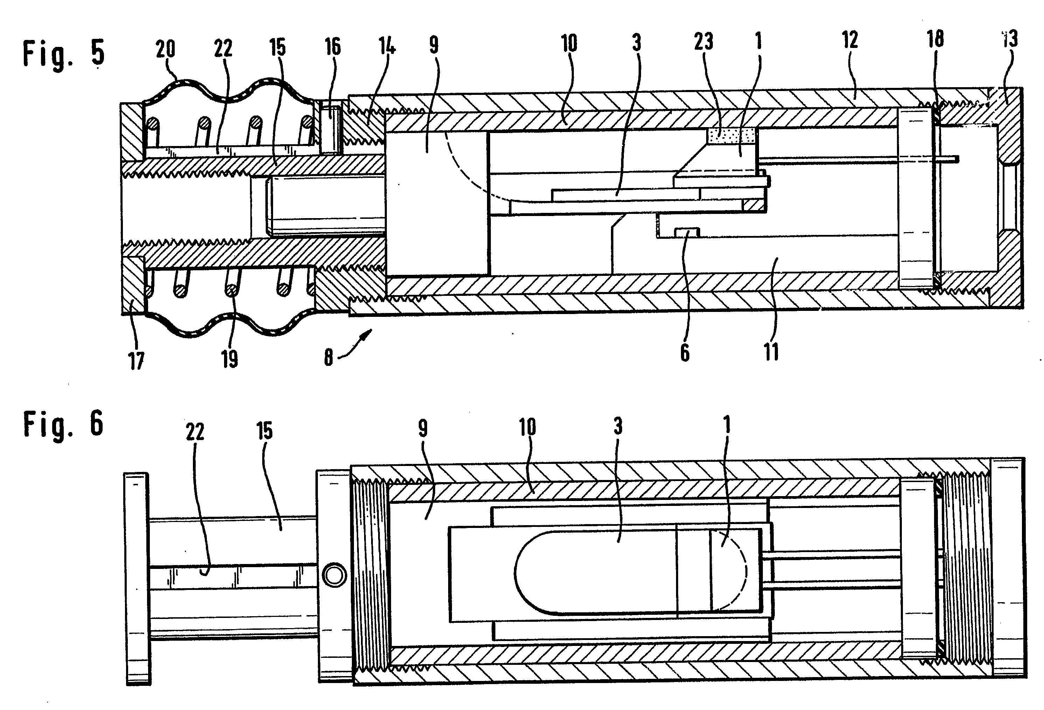

In den Figuren 5 und 6 ist eine erfindungsgemässe Vorrichtung in einem Messtaster 8 einer Messmaschine dargestellt. Die Darstellungen sind gegenüber der Originalgrösse etwa um das 2,8-fache vergrössert. Die Funktion eines Messtasters in einer ein- oder mehrdimensionalen Messmaschine ist dem Fachmann bekannt und wird daher hier nicht näher beschrieben.

Der Messtaster 8 besteht im wesentlichen aus einem Mantelrohr 12, das an einem Ende mit einer Kabelendmuffe 13 und am anderen Ende mit einer Anschlagbuchse 14 abgeschlossen ist. Innerhalb des Mantelrohrs 12 ist eine hochpräzise Führungshülse 10 angeordnet, in der ein Massstab-Träger 9 axial verschiebbar gelagert ist.

Die Pos. 9 und 10 bestehen aus überharten Werkstoffen, wie z.B. SiC, $Si_3N_4$, $ZrO_2$, $Al_2O_3$, Sialon, TiC, ALN, ZrN, $C_4BN$, in poli- oder monokristalliner Struktur. Der Massstab-Träger 9 ist mit einem Taststift-Aufnehmer 15 verschraubt, in welchen ein beispielsweise mit einer Kugel versehener Taststift eingeschraubt werden kann. Zur Sicherung gegen Verdrehen ist der Taststift-Aufnehmer 15 mit einer Führungsnut 22 versehen, in welche ein Führungsbolzen 16 an der Anschlagbuchse 14 eingreift. Eine Druckfeder 19 zwischen dem Federanschlagring 17 und der Anschlagbuchse 14 sorgt dafür, dass der unbelastete Taststift-Aufnehmer 15 bzw. der Massstab-Träger 9 immer in einer Endlage gehalten wird. Zum Schutz gegen Verschmutzung ist zwischen dem Federanschlagring 17 und der Anschlagbuchse 14 ein Gummibalg 20 angeordnet.

Am Massstab-Träger 9 ist der Massstab 3 derart befestigt, dass die Lichtquelle 1 gebündeltes Licht durch den Massstab 3 auf die Empfangseinrichtung 6 werfen kann. Die Empfangseinrichtung 6 ist auf dem Messkopf 11 angeordnet, der gleichzeitig noch als Abstützung für den Massstab-Träger 9 dient. Die Lichtquelle 1 mit der auf ihr angebrachten Blende ist derart im Messkopf 9 gehalten, dass der Massstab 3 unmittelbar auf der Blende entlang gleitet. Damit wird das Auftreten von Streulicht verhindert. Auf der Oberfläche des Massstabs 3 kann zudem eine den Kontakt zwischen Blende und Massstab-Oberfläche erzeugende Emulsion aufgetragen sein. Um eine gewisse Vorspannung der Lichtquelle auf die Oberfläche des Massstabes zu erreichen, kann z.B. zwischen der Führungshülse 10 und die Lichtquelle 1 ein Schaumstoffstück 23 geklemmt sein, welches federelastische Eigenschaften aufweist. Gegenüber der Kabelendmuffe 13 ist die Führungshülse 10 mit einem Dichtungsring 18 abgedichtet.

Das dargestellte Ausführungsbeispiel verdeutlicht die äusserst einfache und kompakte Bauweise der erfindungsgemässen Vorrichtung. Die gesamte für den Messvorgang erforderliche Elektronik ist in den Taster 8 integriert. Selbstverständlich kann die erfindungsgemässe Messvorrichtung auch bei anderen Anlagen eingesetzt werden. So z.B. für Rundheitsprüfgeräte, Dehnungsmessgeräte, Neigungsmesser usw. Die erfindungsgemässe Vorrichtung ist auch nicht auf die Messung linearer Messstrecken beschränkt. Auf genau die gleiche Weise lassen sich auch Winkel messen. Dazu braucht lediglich der lineare Massstab 3 zum Messen einer Drehbewegung gegen einen kreisförmigen Massstab ausgetauscht zu werden, auf dem ein gleicher Raster angeordnet ist.

## Patentansprüche

1. Vorrichtung zur inkrementalen Längenmessung mit einer Lichtquelle (1) zum Durchleuchten eines mit regelmässigen Teilstrichen (2) versehenen, transparenten Massstabes (3), mit einer Blende (4) zum Erzeugen eines gebündelten Lichtstrahles, insbesondere eines Lichtbalkens, und mit einer lichtempfindlichen Empfangseinrichtung (6) zum Empfangen des Lichtstrahles in wenigstens einer Relativlage zwischen Blende und Massstab, dadurch gekennzeichnet, dass die Blende (4) zwischen Lichtquelle (1) und Massstab (3) unmittelbar auf einer Leuchtdiode angebracht ist, und dass die Blende (4) in ihrer Längsausdehnung winkelmässig derart versetzt zu den Teilstrichen (2) des Massstabes (3) angeordnet ist, dass bei einer Relativbewegung zwischen Massstab (3) und Blende (4) ein in der Längsrichtung der Teilstriche (2) verschiebbarer Lichtstrahl (5) auf die Empfangseinrichtung (6) projizierbar ist.

2. Vorrichtung nach Anspruch 1, dadurch gekennzeichnet, dass die Empfangseinrichtung (6) in der Längsrichtung der Teilstriche (2) mehrere Empfangseinheiten (7) aufweist, die je nach der Relativlage zwischen Massstab (3) und Blende (4) zur Signalbildung alternativ aktivierbar sind.

3. Vorrichtung nach Anspruch 2, dadurch gekennzeichnet, dass die Empfangseinrichtung (6) ein Fotodioden-Array oder Image-Sensor ist.

4. Vorrichtung nach einem der Ansprüche 1 bis 3, dadurch gekennzeichnet, dass der Massstab (3) auf der feststehenden Blende (4) gleitend verschiebbar ist.

5. Vorrichtung nach Anspruch 4, dadurch gekennzeichnet, dass die Leuchtdiode mit der Blende und die Empfangseinrichtung fest in einer zylindrischen Führungshülse (10) angeordnet sind, und dass der Massstab (3) auf einem Massstab-Träger (9) befestigt ist, welcher in der Führungshülse (10) axial verschiebbar gelagert ist.

6. Vorrichtung nach Anspruch 5, dadurch gekennzeichnet, dass die Führungshülse (10) und der Massstab-Träger (9) aus überharten Werkstoffen gefertigt sind.

7. Vorrichtung nach einem der Ansprüche 5 oder 6, dadurch gekennzeichnet, dass die Empfangseinrichtung (6) auf einem Messkopf (11) angeordnet ist, der gleichzeitig eine Abstützung für den Massstab-Träger (9) bildet.

8. Vorrichtung nach einem der Ansprüche 4 bis 7, dadurch gekennzeichnet, dass die Leuchtdiode unter Federvorspannung gegen den Massstab (3) gepresst ist.

9. Vorrichtung nach einem der Ansprüche 1 bis 8, dadurch gekennzeichnet, dass die Leuchtdiode zur Ermöglichung eines seitlichen Lichtaustritts unter einem Winkel von 45° angeschrägt ist, und dass die Blende (4) im Bereich der durch die Anschrägung umgelenkten Strahlen liegt.

10. Vorrichtung nach Anspruch 9, dadurch gekennzeichnet, dass die Oberfläche der Leuchtdiode mit einer lichtundurchlässigen, reflexierenden Aluminiumschicht beschichtet ist.

## Claims

1. Incremental length measuring apparatus comprising a light source (1) for the transillumination of a transparent scale (3) provided with regular dividing lines (2), an aperture (4) for producing a focussed light beam, in particular a bar of light, and a photosensitive receiving means (6) for receiving the light beam in at least one relative position as between the aperture and the scale, characterised in that the aperture (4) is disposed between the light source (1) and the scale (3) directly on a light emitting diode and that the aperture (4), in regard to its longitudinal dimension, is arranged in angularly displaced relationship to the dividing lines (2) of the scale (3) in such a way that upon a relative movement as between the scale (3) and the aperture (4) a light beam (5) which is displaceable in the longitudinal direction of the dividing lines (2) can be projected on to the receiving means (6).

2. Apparatus according to claim 1 characterised in that in the longitudinal direction of the dividing lines (2) the receiving means (6) has a plurality of receiving units (7) which can be alternatively activated for forming signals in depencence on the relative position as between the scale (3) and the aperture (4).

3. Apparatus according to claim 2 characterised in that the receiving means (6) is a photoelectric diode array or an image sensor.

4. Apparatus according to one of claims 1 to 3 characterised in that the scale (3) is slidably displaceable on the stationary aperture.

5. Apparatus according to claim 4 characterised in that the light emitting diode with the aperture and the receiving means are fixedly arranged in a cylindrical guide sleeve (10) and that the scale (3) is fixed on a scale carrier (9) which is axially slidably mounted in the guide sleeve (10).

6. Apparatus according to claim 5 characterised in that the guide sleeve (10) and the scale carrier (9) are produced from super-hard materials.

7. Apparatus according to one of claims 5 and 6 characterised in that the receiving means (6) is arranged on a measuring head (11) which at the same time forms a support for the scale carrier (9).

8. Apparatus according to one of claims 4 to 7 characterised in that the light emitting diode is pressed under a spring biasing force towards the scale (3).

9. Apparatus according to one of claims 1 to 8 characterised in that the the light emitting diode is bevelled at an angle of 45° to permit lateral discharge of light and that the aperture (4) is disposed in the region of the beams which are deflected by the bevel configuration.

10. Apparatus according claim 9 characterised in that the surface of the light emitting diode is coated with an opaque, reflective aluminium layer.

**Revendications**

1. Dispositif de mesure incrémentielle de longueurs comportant une source lumineuse (1) pour l'envoi de lumière à travers une règle transparente (3) pourvue de traits réguliers (2), un diaphragme (4) pour la production d'un faisceau lumineux, en particulier d'une barre lumineuse, et un moyen récepteur photosensible (6) pour la réception de ce faisceau dans au moins une position relative du diaphragme et de la règle, caractérisé par le fait que le diaphragme (4) est placé entre la source lumineuse (1) et la règle (3) directement sur une diode luminescente, et que l'étendue longitudinale du diaphragme (4) est décalée angulairement des traits (2) de la règle (3) de façon telle que lors d'un mouvement relatif entre la règle (3) et le diaphragme (4), un faisceau lumineux (5) mobile dans la direction longitudinale des traits (2) puisse être projeté sur le moyen récepteur (6).

2. Dispositif selon la revendication 1, caractérisé par le fait que le moyen récepteur (6) présente dans la direction longitudinale des traits (2) plusieurs éléments récepteurs (7) qui, suivant la position relative de la règle (3) et du diaphragme (4), peuvent être mis en action alternativement pour la formation de signaux,

3. Dispositif selon la revendication 2, caractérisé par le fait que le moyen récepteur (6) est un réseau de photodiodes ou un capteur d'images.

4. Dispositif selon une des revendications 1 à 3, caractérisé par le fait que la règle (3) glisse sur le diaphragme (4), qui est immobile,

5. Dispositif selon la revendication 4, caractérisé par le fait que la diode luminescente, avec le diaphragme, et le moyen récepteur sont placés de manière fixe dans une douille cylindrique de guidage (10), et que la règle (3) est fixée sur un support (9) qui est monté mobile axialement dans la douille de guidage (10).

6. Dispositif selon la revendication 5, caractérisé par le fait que la douille de guidage (10) et le support de règle (9) sont en matériaux de très haute dureté.

7. Dispositif selon une des revendications 5 et 6, caractérisé par le fait que le moyen récepteur (6) est placé sur une tête de mesure (11) qui forme en même temps un appui pour le support de règle (9).

8. Dispositif selon une des revendications 4 à 7, caractérisé par le fait que la diode luminescente est serrée élastiquement contre la règle (9).

9. Dispositif selon une des revendications 1 à 8, caractérisé par le fait que la diode luminescente, pour permettre une sortie latérale de lumière, est biseautée à 45°, et que le diaphragme (4) est situé dans la zone des rayons déviés par le biseau,

10. Dispositif selon la revendication 9, caractérisé par le fait que la diode luminescente est revêtue d'une couche opaque et réfléchissante d'aluminium.

Fig. 1

Fig. 2

Fig. 3

EP 0 237 470 B1

Fig. 4a  Fig. 4b  Fig. 4c  Fig. 4d

EP 0 237 470 B1

Fig. 5

Fig. 6

EP 0 237 470 B1